# EUROPEAN PATENT APPLICATION

(11) **EP 4 186 385 A1**
(43) Date of publication of application: **31.05.2023**
(21) Application number: 22210542.1
(22) Date of filing: 30.11.2022
(51) Int. Cl.: A42B 3/04, B64G 6/00

(54) **ATMOSPHERIC SUIT HELMET DISPLAY AND DISPLAY-BASED CONTROL**

(30) Priority: 30.11.2021 US 202117537809
(71) Applicant: Hamilton Sundstrand Space Systems International, Inc., Windsor Locks, CT 06096 (US)
(72) Inventor: HIMMELMANN, Ashley Rose, Beloit, WI, 53511 (US); ROHRIG, Jake, Simsbury, CT, 06070 (US); TORRALBA, Monica, Antioch, CA, 94531 (US)
(74) Representative: Dehns

(57) **Abstract**

A system in an atmospheric suit includes a transparent organic light emitting diode (OLED) display (115) including a substrate (201). The substrate is an inner surface (215) of an inner shell (210) of a helmet (110) that is closest to a wearer of the atmospheric suit or the substrate is an inner surface (226) of an outer shell (220) of the helmet between the inner shell and the outer shell. The system also includes a controller (300) to control a content displayed on the OLED display.

## Description

### BACKGROUND

Exemplary embodiments pertain to the art of atmospheric suits and, in particular, to an atmospheric suit helmet display and display-based control.

In some environments and applications, a helmet is part of an atmospheric suit and is used not only for protection against impacts but also to maintain a habitable environment. In a space application, for example, a helmet is an essential component of an extravehicular mobility unit (EMU), which also includes a full body suit supplied by an oxygen tank, that maintains an environment that sustains the astronaut. The atmospheric suit can make certain manual operations and control functions cumbersome.

### BRIEF DESCRIPTION

In one exemplary embodiment, a system in an atmospheric suit includes a transparent organic light emitting diode (OLED) display including a substrate. The substrate is an inner surface of an inner shell of a helmet that is closest to a wearer of the atmospheric suit or the substrate is an inner surface of an outer shell of the helmet between the inner shell and the outer shell. The system also includes a controller to control a content displayed on the OLED display.

In addition to one or more of the features described herein, the controller controls a size of the OLED display that displays the content to be a subset of the OLED display.

In addition to one or more of the features described herein, the system also includes a microphone configured to obtain a voice input of the wearer of the atmospheric suit.

In addition to one or more of the features described herein, the controller processes the voice input to identify a pre-defined voice command.

In addition to one or more of the features described herein, the system also includes a camera to capture images of the wearer of the atmospheric suit.

In addition to one or more of the features described herein, the controller processes the images from the camera to identify a pre-defined gesture.

In addition to one or more of the features described herein, the system also includes a second camera configured to capture images of an eye of the wearer of the atmospheric suit.

In addition to one or more of the features described herein, the controller performs eye tracking of the eye of the wearer of the atmospheric suit based on the images from the second camera.

In addition to one or more of the features described herein, the controller controls the OLED display according to commands by the wearer of the atmospheric suit based on one or more of the pre-defined voice command, the pre-defined gesture, and the eye tracking.

In addition to one or more of the features described herein, the controller controls an operation of a system displayed by the OLED display according to commands by the wearer of the atmospheric suit based on one or more of the pre-defined voice command, the pre-defined gesture, and the eye tracking.

In another exemplary embodiment, a method of assembling a system in an atmospheric suit and includes arranging a transparent organic light emitting diode (OLED) display with a substrate. The substrate is an inner surface of an inner shell of a helmet that is closest to a wearer of the atmospheric suit or the substrate is an inner surface of an outer shell of the helmet between the inner shell and the outer shell. The method also includes configuring a controller to control a content displayed on the OLED display.

In addition to one or more of the features described herein, the configuring the controller includes the controller controlling a size of the OLED display that displays the content to be a subset of the OLED display.

In addition to one or more of the features described herein, the method also includes arranging a microphone to obtain a voice input of the wearer of the atmospheric suit.

In addition to one or more of the features described herein, the configuring the controller includes the controller processing the voice input to identify a pre-defined voice command.

In addition to one or more of the features described herein, the method also includes arranging a camera to capture images of the wearer of the atmospheric suit.

In addition to one or more of the features described herein, the configuring the controller includes the controller processing the images from the camera to identify a pre-defined gesture.

In addition to one or more of the features described herein, the method also includes arranging a second camera to capture images of an eye of the wearer of the atmospheric suit.

In addition to one or more of the features described herein, the configuring the controller includes the controller performing eye tracking of the eye of the wearer of the atmospheric suit based on the images from the second camera.

In addition to one or more of the features described herein, the configuring the controller includes the controller controlling the OLED display according to commands by the wearer of the atmospheric suit based on one or more of the pre-defined voice command, the pre-defined gesture, and the eye tracking.

In addition to one or more of the features described herein, the configuring the controller includes the controller controlling an operation of a system displayed by the OLED display according to commands by the wearer of the atmospheric suit based on one or more of the pre-defined voice command, the pre-defined gesture, and the eye tracking.

### BRIEF DESCRIPTION OF THE DRAWINGS

The following descriptions should not be considered limiting in any way. With reference to the accompanying drawings, like elements are numbered alike:
FIG. 1 shows an atmospheric suit with an in-helmet display and a display-based controller according to one or more embodiments;
FIG. 2 details aspects of the in-helmet display and display-based control according to one or more embodiments; and
FIG. 3 is a block diagram of components that facilitate the in-helmet display and display-based control according to one or more embodiments.

### DETAILED DESCRIPTION

A detailed description of one or more embodiments of the disclosed apparatus and method are presented herein by way of exemplification and not limitation with reference to the Figures.

As previously noted, an atmospheric suit includes a helmet and maintains a habitable environment for the wearer in different applications. In the exemplary space application, the atmospheric suit may be an EMU. Prior approaches to providing information to the astronaut wearing the EMU include transmitting sound to the astronaut or displaying information on the display and control module (DCM) that is on the front of the EMU and may become dirty or damaged. In addition, prior approaches to the astronaut performing functions (e.g., sample collection) or controlling instrumentation (e.g., rover operation) involve using gloved hands, which can be cumbersome and lack accuracy.

Embodiments of the systems and methods detailed herein relate to an atmospheric suit helmet display and display-based control. Information may be displayed via a transparent organic light emitting diode (OLED). The helmet includes an outer shell whose outer surface is exposed to the environment and an inner shell whose inner surface is exposed to the astronaut. The display may be projected on the inner surface of the inner shell or in the space between the outer surface of the inner shell and the inner surface of the outer shell. As such, the display is unaffected by debris or damage. In addition, the display is only provided as needed such that, as opposed to a display screen or visor, for example, the wearer does not contend with another object in their line of sight when there is nothing to display. Further, voice commands, gestures, eye tracking, or a combination may be used for display-based control, as detailed. That is, beyond controlling the display itself (e.g., size, position), an operation related to a displayed system or displayed information may be implemented by the astronaut by interacting with the display.

While an EMU and a space application are specifically discussed for explanatory purposes, applications for the display and display-based control according to one or more embodiments also include underwater (e.g., in an atmospheric diving suit), earth-based (e.g., in a hazmat suit or contamination suit), high-altitude (e.g., in a flight suit), and sub-surface environments. Generally, any suit that includes the helmet to maintain a habitable environment is referred to as an atmospheric suit.

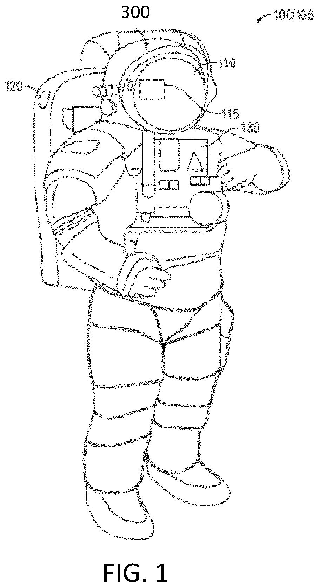

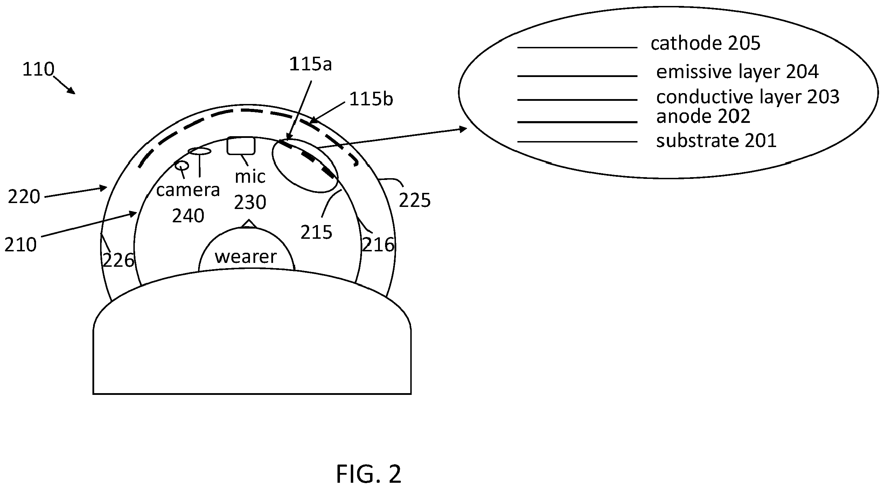

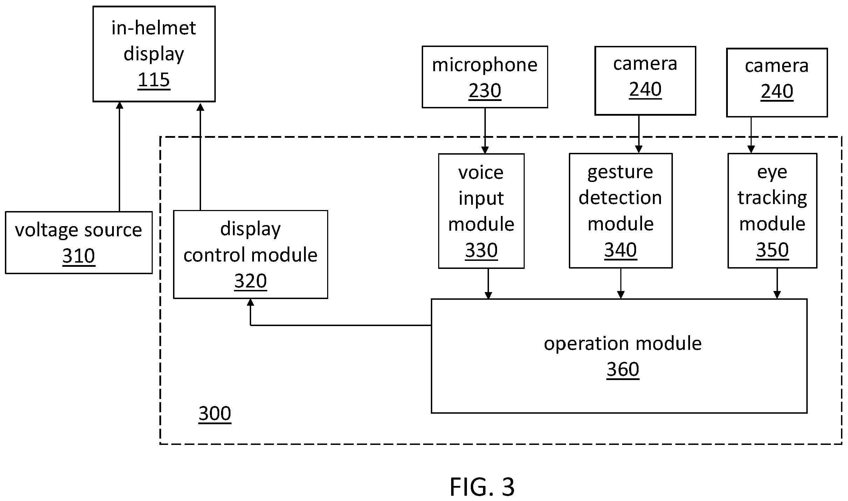

FIG. 1 shows an atmospheric suit 100 with an in-helmet display 115 and a display-based controller 300 according to one or more embodiments. The exemplary atmospheric suit 100 shown in FIG. 1 is an EMU 105. The EMU 105 includes a helmet 110 with an in-helmet display 115. The in-helmet display 115 and helmet-based controller 300 are further detailed with reference to FIGS. 2 and 3. Systems that are affixed as part of the EMU 105 include a primary life support system (PLSS) 120 and a display and control module (DCM) 130. These systems 120, 130, along with components of the EMU 105, create a habitable environment for a wearer performing extravehicular activity in space.

FIG. 2 details aspects of the in-helmet display 115 and display-based control according to one or more embodiments. The perspective view is from the top down in FIG. 2. The head of the wearer moves independently of the helmet 110 and, in the view shown in FIG. 2, the face of the wearer is indicated as pointing to the center of the transparent part (i.e., inner shell 210) of the helmet. As previously noted, the helmet 110 includes the inner shell 210 that maintains the habitable environment for the wearer of the atmospheric suit 100 and an outer shell 220 that absorbs impacts and protects the habitable environment maintained within the inner shell 210. The inner surface 215 of the inner shell 210, which is the surface closest to the wearer, is indicated. The outer surface 225 of the outer shell 220, which is the surface in contact with the outer environment, is also indicated, as are the outer surface 216 of the inner shell 210 and the inner surface 226 of the outer shell 220.

Two exemplary in-helmet displays 115a, 115b (generally referred to as 115) are shown to illustrate exemplary locations and sizes, which are not intended to be limiting. Only one of the in-helmet displays 115 may be configured in a given helmet 110. The in-helmet displays 115a, 115b illustrate the size and position of active displays. That is, the OLED may cover all or most of the inner surface 215 of the inner shell 210, for example, but only a portion may be used as the in-helmet display 115a at a given time. Alternately, all of the available OLED may be used for the in-helmet display 115.

The expanded view of the in-helmet display 115a indicates the layers that generally make up an OLED. These include a substrate 201, anode 202, conductive layer 203, emissive layer 204, and cathode 205. Based on an applied voltage, electrons flow from the cathode to the anode and the emissive layer emits radiation whose frequency is in the visible range. Thus, the OLED is self-illuminating and does not require a separate light source. The voltage source 310 and display control module 320 that control the size, location, and content (i.e., what is displayed) of the in-helmet display 115 are shown in FIG. 3. In the exemplary case, the layers of the in-helmet display 115 are transparent and the substrate 201 is the inner shell 210 in the case of the in-helmet display 115a and the substrate 201 is the outer shell 220 in the case of the in-helmet display 115b.

Also shown in FIG. 2 are a microphone 230 and two cameras 240. The numbers and locations of microphones 230 and cameras 240 are not limited by the exemplary illustration. The microphone 230 may be used as an input for voice commands. One of the cameras 240 may be used as an input for gesture detection while the other camera 240 may be used for eye tracking. Each of the inputs, alone or in combination, may be used to control the size, location, and content of the in-helmet display 115. In addition, one or more of the inputs may be used to control operations relevant to the content of the in-helmet display 115, as further discussed with reference to FIG. 3.

FIG. 3 is a block diagram of components that facilitate the in-helmet display 115 and display-based control according to one or more embodiments. The helmet-based controller 300 refers to processing circuitry that includes one or more processors and memory. The functionality of the helmet-based controller 300 is discussed with reference to modules 320 through 360. As shown, the voltage source 310 and display control module 320 of the helmet-based controller 300 result in the in-helmet display 115. The voltage source 310 and some or all of the modules of the helmet-based controller 300 may be located with the DCM 130, for example. The display may be of system for sample collection on the surface of a planet or another operable system, for example.

The microphone 230 obtains vocal input from the wearer of the atmospheric suit 100 that is provided to a voice input module 330 of the helmet-based controller 300. The voice input module 330 may determine if a pre-defined voice command has been spoken, for example. One or more cameras 240 may provide input to a gesture detection module 340 and an eye tracking module 350 of the helmet-based controller 300. The exemplary cameras 240 shown in FIG. 2 are both within the inner shell 210 of the helmet 110. Thus, the camera 240 that provides input to the gesture detection module 340 may capture images of the wearer that, when processed by the gesture detection module 340, are identified as pre-defined facial gestures. Based on the location of additional or alternate cameras 240, other types of gestures may be captured and identified as pre-defined gestures. Gesture detection and eye tracking are generally known, as are voice commands, and each aspect of implementing the processing is not detailed here. The gesture detection module 340 may determine if pre-defined gestures (i.e., gestures that are mapped to an operation) have been performed, and the eye tracking module 350 may determine if a pre-defined command (i.e., a command that is mapped to an operation) is being conveyed via eye movement.

The inputs may be used in combination. For example, a voice command, obtained via the microphone 230 and processed by the voice input module 330, and/or a gesture, obtained via the camera 240 and processed by the gesture detection module 340, may be used to trigger the control of an operation via eye movement. By using the voice command and/or gesture as a trigger, every eye movement would not be mistaken for a command. The triggered eye movement may interact with the in-helmet display to activate a system or operate a component being observed on the in-helmet display 115, for example. In the exemplary case of the in-helmet display 115 displaying a system for sample collection on the surface of a planet (as the content of the display), the wearer of the EMU 105 may control when and where sample collection should take place via eye movement that may be indicated as a command via voice or gesture. When the wearer observes the sample collection system in the correct location, the wearer may provide the command to commence collection.

The operation module 360 obtains inputs from the modules 330, 340, 350 and controls the in-helmet display 115 via the display control module 320. The operation module 360 may be part of or couple to components of the DCM 130 (or PLSS 120) to communicate with the sample collection system, rover, or any other system whose operation the wearer might view or control via the helmet-based controller 300.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system in an atmospheric suit, the system comprising:
a transparent organic light emitting diode, OLED, display (115) including a substrate (201), wherein the substrate is an inner surface (215) of an inner shell (210) of a helmet (110) that is closest to a wearer of the atmospheric suit or the substrate is an inner surface (226) of an outer shell (220) of the helmet between the inner shell and the outer shell; and
a controller (300) configured to control a content displayed on the OLED display.

2. The system according to claim 1, wherein the controller is configured to control a size of the OLED display that displays the content to be a subset of the OLED display.

3. The system according to claim 1 or 2, further comprising a microphone (230) configured to obtain a voice input of the wearer of the atmospheric suit.

4. The system according to claim 3, wherein the controller is configured to process the voice input to identify a pre-defined voice command.

5. The system according to claim 4, further comprising a camera (240) configured to capture images of the wearer of the atmospheric suit.

6. The system according to claim 5, wherein the controller is configured to process the images from the camera to identify a pre-defined gesture.

7. The system according to claim 6, further comprising a second camera configured to capture images of an eye of the wearer of the atmospheric suit.

8. The system according to claim 7 wherein the controller is configured to perform eye tracking of the eye of the wearer of the atmospheric suit based on the images from the second camera.

9. The system according to claim 8, wherein the controller is configured to control the OLED display according to commands by the wearer of the atmospheric suit based on one or more of the pre-defined voice command, the pre-defined gesture, and the eye tracking, or wherein the controller is configured to control an operation of a system displayed by the OLED display according to commands by the wearer of the atmospheric suit based on one or more of the pre-defined voice command, the pre-defined gesture, and the eye tracking.

10. A method of assembling a system in an atmospheric suit, the method comprising:
arranging a transparent organic light emitting diode, OLED, display with a substrate, wherein the substrate is an inner surface of an inner shell of a helmet that is closest to a wearer of the atmospheric suit or the substrate is an inner surface of an outer shell of the helmet between the inner shell and the outer shell; and
configuring a controller to control a content displayed on the OLED display.

11. The method according to claim 10, wherein the configuring the controller includes the controller controlling a size of the OLED display that displays the content to be a subset of the OLED display.

12. The method according to claim 10 or 11, further comprising arranging a microphone to obtain a voice input of the wearer of the atmospheric suit, and optionally wherein the configuring the controller includes the controller processing the voice input to identify a pre-defined voice command.

13. The method according to claim 12, further comprising arranging a camera to capture images of the wearer of the atmospheric suit, and optionally wherein the configuring the controller includes the controller processing the images from the camera to identify a pre-defined gesture.

14. The method according to claim 13, further comprising arranging a second camera to capture images of an eye of the wearer of the atmospheric suit, and optionally wherein the configuring the controller includes the controller performing eye tracking of the eye of the wearer of the atmospheric suit based on the images from the second camera.

15. The method according to claim 14, wherein the configuring the controller includes the controller controlling the OLED display according to commands by the wearer of the atmospheric suit based on one or more of the pre-defined voice command, the pre-defined gesture, and the eye tracking, or wherein the configuring the controller includes the controller controlling an operation of a system displayed by the OLED display according to commands by the wearer of the atmospheric suit based on one or more of the pre-defined voice command, the pre-defined gesture, and the eye tracking.
